Europäisches Patentamt

European Patent Office

Office européen des brevets

(11) Publication number: **0 176 620**
**B1**

(12) **EUROPEAN PATENT SPECIFICATION**

(45) Date of publication of patent specification: **09.01.91**

(21) Application number: **84111902.7**

(22) Date of filing: **04.10.84**

(51) Int. Cl.⁵: **G 01 D 5/48,** G 01 D 5/247,
G 01 D 5/16

(54) Method and apparatus for detecting movable object.

(30) Priority: **05.10.83 JP 185061/83**

(43) Date of publication of application:
**09.04.86 Bulletin 86/15**

(45) Publication of the grant of the patent:
**09.01.91 Bulletin 91/02**

(84) Designated Contracting States:
**DE SE**

(56) References cited:
**FR-A-2 465 196**
**GB-A-2 016 694**
**US-A-4 071 818**
**US-A-4 144 519**
**US-A-4 404 523**

(73) Proprietor: **HITACHI, LTD.**
**6, Kanda Surugadai 4-chome**
**Chiyoda-ku, Tokyo 100 (JP)**

(72) Inventor: **Kitaura, Wataru**
**1-19-3-204, Ishinazaka-cho**
**Hitachi-shi Ibaraki-ken (JP)**
Inventor: **Ito, Tetsuo**
**4-35-6, Nishinarusawa-cho**
**Hitachi-shi Ibaraki-ken (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

EP 0 176 620 B1

## Description

This invention relates to a position detector utilizing a magnetostrictive effect, and more particularly to a position detector for detecting the position of an elongated movable object which provides high detection accuracy even in the atmosphere in which a temperature change occurs. Now a principal arrangement of a position detector and its functions are disclosed.

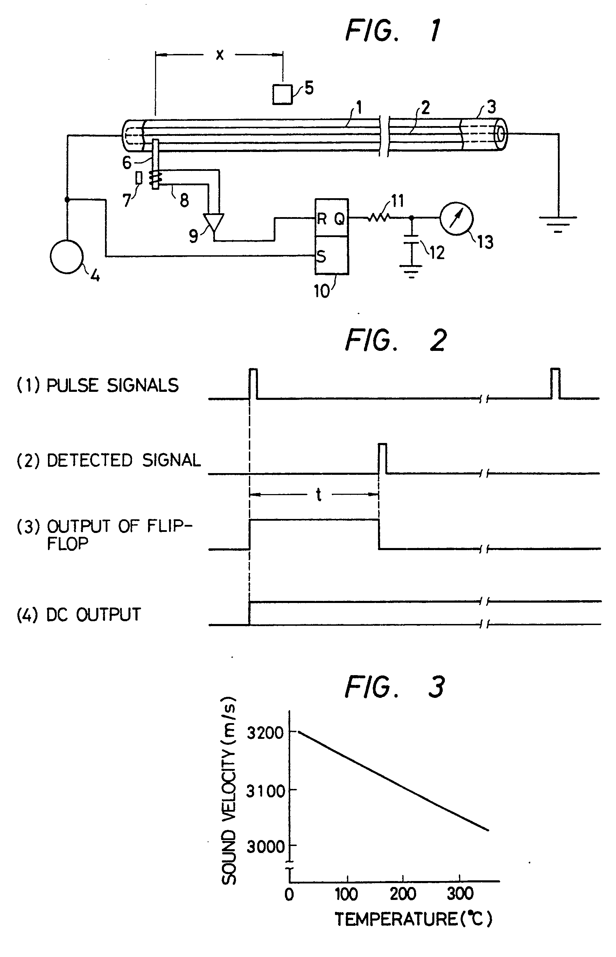

Referring initially to Figures 1 through 3, the problems involved in the principal arrangement will be explained.

In Figure 1, a core wire 2 is disposed inside a waveguide 1 made of a ferromagnetic material such as an Ni—Fe alloy or the like. When a pulse current is applied from a pulse generator 4 to the core wire 2, an ultrasonic wave is generated in the waveguide 1 by the magnetostrictive effect at positions where permanent magnets 5 disposed on a movable object exist. A protective pipe 3 is disposed lest the waveguide comes into contact with external objects and the ultrasonic wave is damped. The resulting ultrasonic wave reaches a guide 6. A coil 8 is wound on the guide 6, and a permanent magnet 7 is disposed in the proximity of the coil 8. Therefore, when the ultrasonic wave arrives at the guide 6 passing through the inside of the coil 8 which exists in the magnetic field generated by the permanent magnet 7, a voltage is induced in the coil 8 by the inverse magnetostrictive effect.

If the permanent magnet 5 exists at a position having a distance x from the guide 6, the voltage can be detected in the coil 8 at the time t (sec) after the application of the pulse current, as shown in Figure 2(2). The position x can be determined by the following formula by measuring this time t:

$$x = v \cdot t \qquad (1)$$

where v is the propagation speed of the ultrasonic wave inside the waveguide 1.

More definitely, a flip-flop 10 is set simultaneously with the application of the pulse current as shown in Figure 1, and is reset when the coil 8 detects the ultrasonic wave. For this reason, the output of the flip-flop 10 becomes "1" only for the time t which is proportional to the position x as shown in Figure 2(3). A d.c. output proportional to x appears in an indicator 13 after the output is smoothed by a resistor 11 and a capacitor 12.

In a position detector arrangement of this kind, the propagation time t of the ultrasonic wave in the formula (1) is measured, so that t will change if the propagation speed v changes for some reason or other, and the change of v results directly in the detection error of x.

Figure 3 shows the temperature dependence of the propagation speed of the ultrasonic wave inside a nickel steel. It has a temperature dependence of approximately $1.5 \times 10^{-2}$ %/°C, and a detection error of about 4.5% appears if the ambient temperature changes by 300°C. When this position detector is used as a position detector for detecting the control rod of a nuclear reactor, for example, there is the possibility that a detection error of about 83 mm occurs.

The US—A—4 404 523 describes a readout circuit for linear displacement transducers and relates to a measurement of a static stress distribution around the excavation in the underground by using a magneto-strictive probe.

A plurality of ring-shaped magnets are fixed in the bore hole which is drilled upward from the roof of the excavation to be tested. A probe is inserted through the ring-shaped magnets. When a pulse current is supplied to the conductor running through the center of the tube a stress wave is generated at the location of each ring-shaped magnet.

A time interval between stress waves generated by the respective ring-shaped magnets is measured and the measured time interval is multiplied by a propagation speed of the stress wave whereby the change in the distance between the respective ring-shaped magnets is detected. The static stress distribution is measured on the basis of the thus detected distance change. Also in this measuring method, the precise measurement cannot be achieved, if the propagation speed of the stress wave generated varies for some reason, mainly due to the change in temperature.

The present invention is therefore directed to provide a method of detecting the position of a movable object and a high precision position detector having a limited detection error due to a temperature change.

The above object is achieved, according to the invention by a method of detecting the position of a movable object whereby the moving distance x of the movable object is determined from the formula below by counting the number i of ultrasonic wave pulses produced by a first plurality of permanent magnets existing between a reference point and a position (L−β) measured from said reference point:

$$x = L - (i - 1 + t/T)l - \alpha - \beta$$

where said reference point is the position of ultrasonic wave detection means; L is the entire length of a waveguide; (L−β) is the set position of a second one or more permanent magnet or magnets closest to said reference point measured from said reference point; α is the position of said first plurality of permanent magnets closest to said reference point measured from said reference point when the position of said movable object is zero; l is the set spacings between said first plurality of permanent magnets; t is the ultrasonic wave propagation time, which is to be measured, between said second permanent magnet or magnets positioned at (L−β) from said reference point and the position of said first plurality of permanent magnets closest to said second permanent magnet or magnets on the side of said reference point; and T is the ultrasonic wave propagation time, which is to be measured, between two of said first plurality of permanent magnets positioned on both sides of said second permanent magnet or magnets positioned at $(L-\beta)$ from said reference point.

A position detector for a movable object which solves the above object comprises: a magnetostrictive waveguide having therein a core wire; means for applying a pulse current to said core wire; a movable object moving in the axial direction of said waveguide; a plurality of first magnetic field generation means disposed on said movable object; one or more second magnetic field generation means disposed in the axial direction of said waveguide; means for detecting and counting the number of pulses of magnetostrictive ultrasonic waves generated in said waveguide by said first and second magnetic field generation means; means for measuring the propagation time of the ultrasonic wave produced by said first magnetic field generation means and the propagation time of the ultrasonic wave produced by said second magnetic field generation means; and means for determining the moving distance of said movable object from the number of said ultrasonic wave pulses and said ultrasonic wave propagation time.

Figure 4 shows the construction of an embodiment of the present invention;

Figure 5 shows a circuit diagram according to one embodiment of the invention;

Figure 6 shows the principle of operation of the circuit;

Figures 7 through 9 show examples of detected pulses depending upon magnet positions;

Figure 10 shows a driving mechanism of a reactor control rod; and

Figure 11 shows an application example of the invention.

Hereinafter, one embodiment of the present invention will be described in detail.

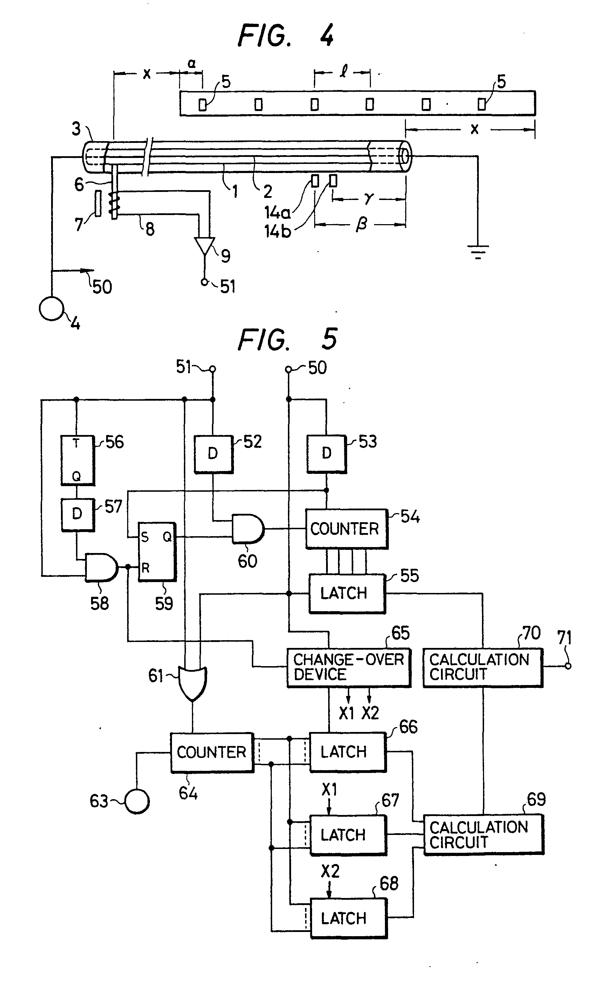

Figure 4 shows a definite example of the position detector according to the present invention. In the drawing, like reference numerals are used to identify like constituents as in Figure 1. Figure 5 shows a definite circuit diagram of a detection circuit of the position detector of the present invention.

The differences of the position detector shown in Figure 4 from the position detector shown in Figure 1 are that a first plurality of permanent magnets 5 (hereinafter called "movable permanet magnets 5") are disposed on the movable object with a predetermined spacing I between them, at a distance $\alpha$ from the reference point of the movable object corresponding to the guide 6, and that two permanent magnets 14 (hereinafter called "fixed permanent magnets 14") are disposed at distances $\beta$ and $\gamma$ from the end of the waveguide 1 at the end opposite to the position of the guide 6.

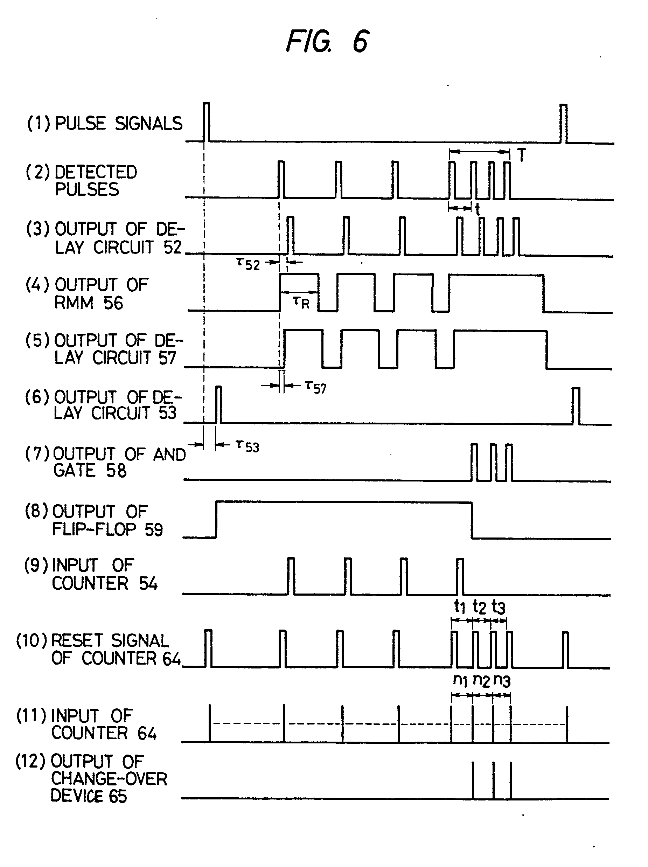

When a pulse current such as shown in Figure 6(1) is applied from the pulse generator 4 to the core wire 2, a magnetostrictive ultrasonic wave is generated by the movable permanet magnets 5 opposite to the waveguide 1 and the fixed permanent magnets 14. This ultrasonic wave propagates through the waveguide 2, reaches the guide 6 and induces a voltage in the coil 8. The voltage is then subjected to wave shaping and is amplified, providing a signal shown in Figure 6(2) from a terminal 51.

A signal is applied from a terminal 50 to a latch 55 shown in Figure 5 simultaneously with the application of the pulse current, and the content of a counter 54 is latched by the latch 55. The counter 54 is reset by a pulse passing through a delay circuit 53 which sets a delay time $\tau_{53}$ to be longer this latch operation. If this delay circuit 53 does not exist, the latching operation of the content of the counter 54 by the latch 55 starts simultaneously with the resetting operation of the counter 54, so that the latching operation of the content of the counter 54 into the latch 55 can not be carried out normally.

The detected pulse in Figure 6(2) triggers a retriggerable monostable-multi vibrator 56 (hereinafter called "R.M.M.") and this output Q becomes such as shown in Figure 6(4). Here, the set time $\tau_R$ of R.M.M. is smaller than the propagation time of the ultrasonic wave between the adjacent movable permanent magnets. Since R.M.M. operates at the rise of the detected pulse shown in Figure 6(2), a flip-flop 59 will be reset simultaneously with the application of the first detected pulse to the terminal 51 unless a delay circuit 57 having a delay time $\tau_{57}$ greater than the time width of the detected pulse is disposed. The circuit shown in Figure 5 is directed to count the pulses until the period of the detected pulse becomes different, and the flip-flop 59 must be reset at the timing at which the pulse having a different period is detected. Therefore, the pulse is applied to an AND gate 58 through the delay circuit 57. In other words, one of the inputs to the AND gate 58 becomes such as shown in Figure 6(5). The output signal of the AND gate 58 becomes such as shown in Figure 6(7), and the flip-flop 59 is reset at the first pulse.

The counter 54 counts the detected pulses that are applied to an AND gate 60 through the delay circuit 52 during the period in which the flip-flop 59 is kept set. Here, the delay circuit 52 is disposed to delay the detected pulses by only a limited time $\tau_{52}$ so as not to count the pulse that resets the flip-flop 59.

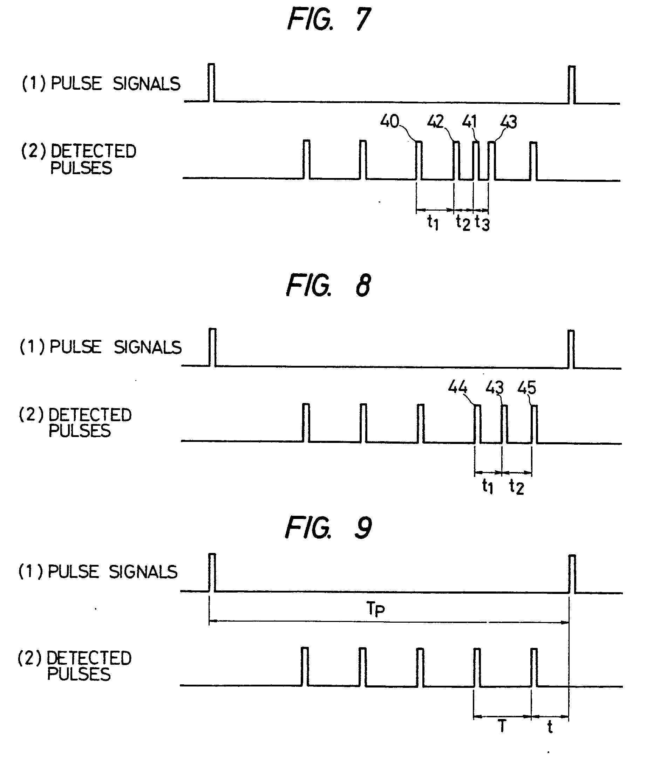

On the other hand, a counter 64 is reset by the pulse current or the detected pulse. An oscillator 63 is connected to the counter 64 and always effects counting. A change-over device 65 sequentially produces signals to the latches 66, 67 and 68 by means of the output signal of the AND gate 58 (Figure 7(7)), and the content of the counter is sequentially stored in the latches 66, 67 and 68. In other words, the numbers of pulses $n_1$, $n_2$ and $n_3$ corresponding to the pulse intervals $t_1$, $t_2$ and $t_3$ are stored in the latches.

Thereafter, a calculation circuit 69 performs the following processing. First, $n_1$, $n_2$ and $n_3$ are added, and the pulse number N corresponding to the pulse interval T is determined. Next, a division $n_1/N$ is effected to determine the relation of position between the fixed permanent magnet 14 and the movable permanent magnet 5. Next, another calculation circuit 70 performs the following calculation using the result of the calculation circuit 69, the content of the latch 55 and the set condition l, α, β of the magnets:

$$x = L - (i - 1 + \frac{t}{T})l - α - β \qquad (2)$$

where L is the total length of the waveguide and i is the content of the latch 55, that is the number of the ultrasonic wave pulses produced by the movable permanent magnets 5.

This value x represents the moving distance of a movable object with the guide 6 shown in Figure 4 being the reference point.

The above explains the operation when the fixed permanent magnet is interposed by the fixed permanent magnets, but when the movable permanent magnet is interposed between the fixed permanent magnets, on the contrary, the ultrasonic wave is detected as shown in Figure 7(2). The ultrasonic wave 41 generated by the movable permanent magnets 5 is detected between the ultrasonic waves 42 and 43 generated by the fixed permanent magnets 14. Here, the contents $n_1$, $n_2$ and $n_3$ taken into the latches 66, 67 and 68 are values that correspond to the time $t_1$, $t_2$ and $t_3$ shown in Figure 7(2). The value $t_1$ in Figure 7(2) is reliably greater than the value $t_1$ shown in Figure 6(10). When the content $n_1$ of the latch 66 corresponding to $t_1$ exceeds a predetermined value m, the change-over device 65 is prevented from producing the latch signal to the latch 68, and the latch 68 is cleared. Therefore, the content $n_3$ of the latch 68 in this case becomes zero, and thereafter the position is detected in the same way as described above. Here, the value m is set to a value $n_1$ which is taken into the latch 66 when the position of the fixed permanent magnet 14b close the end of the waveguide overlaps with the position of the movable permanent magnet. Therefore, no problem occurs even when the fixed permanent magnet 14b overlaps with the movable permanent magnet.

As the third case, there is a case where the distance of the fixed permanent magnet 14a from the reference point coincides with the distance of the movable permanent magnet 5 from the reference point. The detected signal in this case becomes a single signal as shown in Figure 8(2) because the ultrasonic wave produced by the fixed permanent magnet 14a overlaps with the ultrasonic wave produced by the movable permanent magnet 5. Therefore, the values $n_1$ and $n_2$ corresponding to $t_1$ and $t_2$ shown in Figure 8(2) are taken into the latches 66 and 67, but $n_3$ is zero because the latch 68 does not operate. The $t_1$ value in this case is equal to $t_2$ shown in Figure 6(10). Therefore, if the magnets are disposed in such a manner as to satisfy the relation $t_1 < t_2$, the

relation of the position of the magnets can be discriminated by checking the condition $t_1 < t_2$. In this instance, the position can be detected by reducing the spacing (β−γ) between the fixed permanent magnets from the value obtained by equation (2).

The description given above deals with the case where two fixed permanent magnets are disposed, but the number of the fixed permanent magnets may be one. The detected signal in this case becomes such as shown in Figure 8(2), and only $t_1$ and $t_2$ are measured whereby the latch 68 shown in Figure 5 becomes unnecessary. If a device for monitoring the data on the measured position is disposed in order to cope with the overlap of the magnets, the position detection becomes possible.

Furthermore, the movable permanent magnets may be disposed in such a manner as to satisfy the following relation between the period $T_p$ of the pulse current and the ultrasonic pulse interval T by the movable permanent magnets:

$$T_p = nT + T_α \qquad (3)$$

where n is the number of movable permanent magnets, and $T_α$ is the time required for the ultrasonic wave to propagate a distance α, as shown in Figure 4.

In this case, a signal such as shown in Figure 9(2) is detected when the movable object moves. The value t changes between O and T. The position can be detected by merely measuring the time t if the pulse interval T is set before the time t as shown in Figure 9(2) or is known in advance from the set spacing between the movable permanent magnets.

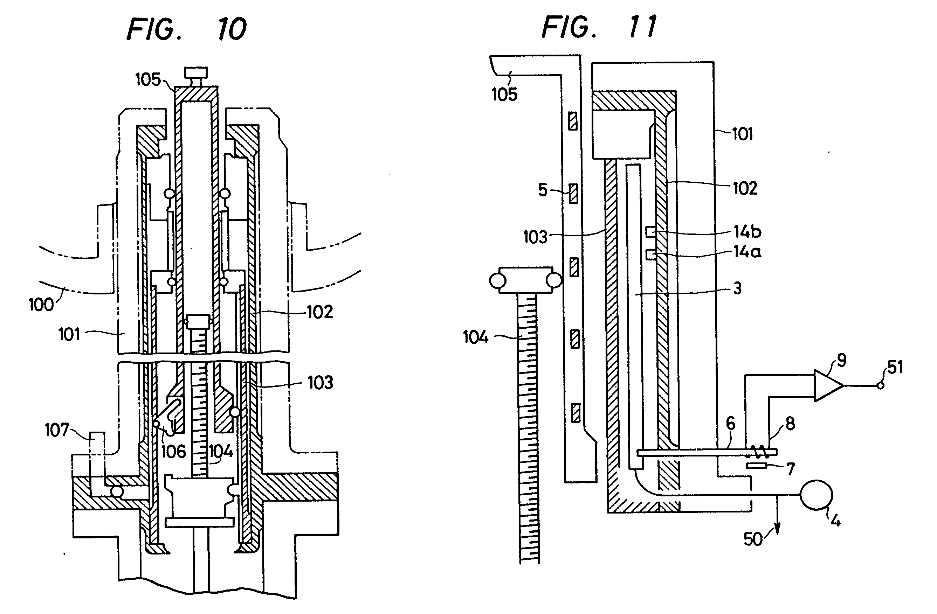

An example of application of the position detector in accordance with the present invention to a position detector for the control rod of a nuclear reactor will be explained with reference to Figures 10 and 11. The control rod is connected to a hollow piston 105, and is operated by the rotation of a ball screw 104 when the system operates. It is disengaged from the latch 106 at the time of scrum, and is operated by the pressure of the water entering from a scrum piping arrangement 107. Figure 11 shows the fitting position of the position detector of the present invention, where it is shown disposed between an outer tube 102 and a guide tube 103. The fixed permanent magnet 14 is fixed to the outer tube, while the movable permanent magnets 5 are fitted to the hollow piston 105, so that the position of the hollow piston 105, that is, the position of the control rod, can be detected by the operation described above.

The detection error when the full stroke of the control rod is 3,660 mm and the number of the movable permanent magnets is 10, is about 1.6 mm provided that the ambient temperature changes by 300°C, and this value is about 1/50 of the conventional value.

As described above, the position detector of the present invention is of the system which counts digitally the number of pulses, and determines the position from the ratio t/T of the ultrasonic wave propagation time t between the movable permanent magnet 5 and the fixed permanent magnet 14, shown in Figure 6(2), to the ultrasonic wave propagation time T between the adjacent movable permanent magnets 5. Therefore, the detection error due to the change of the ambient temperature around the waveguide is small, and the position can be detected highly accurately.

**Claims**

1. A method of detecting the position of a movable object whereby the moving distance x of the movable object is determined from the formula below

(a) by counting the number i of ultrasonic wave pulses produced by a first plurality of permanent magnets existing between a reference point and a position $(L-\beta)$ measured from said reference point said first plurality of permanent magnets being attached to said movable object and

(b) by measuring the time between pulses produced by said first plurality of permanent magnets and a second permanent magnet or magnets, said pulses propagating to a reference point at which an ultrasonic wave detection means is situated:

$$x=L-(i-1+t/T)l-\alpha-\beta$$

L is the entire length of a waveguide;

$(L-\beta)$ is the set position of that magnet of a second one or more permanent magnet or magnets fixed with respect to the waveguide, which lies closest to said reference point measured from said reference point;

$\alpha$ is the position of that magnet of said first plurality of permanent magnets which lies closest to said reference point measured from said reference point when the position of said movable object is zero;

l is the set spacings between said first plurality of permanent magnets;

t is the ultrasonic wave propagation time, which is to be measured, between that magnet of said second permanent magnet or magnets which is positioned at $(L-\beta)$ from said reference point and the position of that magnet of said first plurality of permanent magnets which lies closest to said second permanent magnet or magnets on the side of said reference point;

and T is the ultrasonic wave propagation time, which is to be measured, between two of said first plurality of permanent magnets positioned on both sides of said second permanent magnet or magnets positioned at $(L-\beta)$ from said reference point.

2. A position detector for a movable object comprising:

a magnetostrictive waveguide (1) having therein a core wire (2);

means (4) for applying a pulse current to said core wire;

a movable object moving in the axial direction of said waveguide;

a plurality of first magnetic field generation means (5) disposed on said movable object;

one or more second magnetic field generation means (14) disposed in the axial direction of said waveguide;

means (8, 9, 54) for detecting and counting the number of pulses of magneto-strictive ultrasonic waves generated in said waveguide by said first and second magnetic field generation means;

means (61—69) for measuring the propagation time of the ultrasonic wave produced by said first magnetic field generation means and the propagation time of the ultrasonic wave produced by said second magnetic field generation means; and

means (70) for determining the moving distance of said movable object from the number of ultrasonic wave pulses and said ultrasonic wave propagation time.

3. The position detector for a movable object as defined in claim 2 wherein both of said first and second magnetic field generation means are permanent means.

4. The position detector for a movable object as defined in claim 3 wherein the set spacings (l) between the first plurality of permanent magnets existing outside said waveguide and moving in the axial direction of said waveguide are constant.

5. The position detector for a movable object as defined in claim 3 wherein the first plurality of said permanent magnets (5) disposed on said movable object do not exist at the same position of said ultrasonic wave detection means disposed on said waveguide within the range in which said movable object can move.

6. The position detector for a movable object as defined in claim 3 wherein the detection means (8, 9) for detecting the ultrasonic wave generated on said waveguide is disposed at one of the ends (3) of said waveguide (1), and said second permanent magnet or magnets are disposed at positions spaced apart by a distance $(\beta)$ from the other end of the waveguide, where $\beta$ is greater than the spacing (l) of said first plurality of permanent magnets disposed on said movable object.

**Patentansprüche**

1. Verfahren zur Erfassung der Position eines beweglichen Objektes, wobei die Bewegungsentfernung x des beweglichen Objektes durch die unten angegebene Formel berechnet wird, indem

(a) die Anzahl i der von einer ersten Mehrzahl von Dauermagneten erzeugten Ultraschall-Wellenimpulsen zwischen einem Referenzpunkt und einer Position $(L-\beta)$, die sich von dem Referenzpunkt aus bestimmt, gezählt wird, wobei die erste Mehrzahl von Dauermagneten am dem beweglichen Objekt befestigt ist, und indem

(b) die Zeitspanne zwischen den von der ersten Mehrzahl von Dauermagneten erzeugten Impulsen und denen von einem oder mehreren zweiten Dauermagneten erzeugten Impulsen gemessen wird, wobei sich die Impulse zu einem Referenzpunkt hin ausbreiten, an dem sich ein Ultraschallwellen-Erfassungsmittel befindet:

$$x=L-(i-l+t/T)l-\alpha-\beta$$

wobei

L die Gesamtlänge eines Wellenleiters ist;

$(L-\beta)$ die festgesetzte Position desjenigen Magneten des/der zweiten Dauermagneten, die in bezug auf den Wellenleiter befestigt sind, ist, der, von dem Referenzpunkt aus gemessen, diesem am nächsten liegt;

$\alpha$ die Position desjenigen Magneten der ersten Mehrzahl von Dauermagneten ist, der, von dem Referenzpunkt aus gemessen, diesem am nächsten liegt, wenn die Position des beweglichen Objektes gleich Null ist;

I der gewählte Abstand zwischen den Magneten der ersten Mehrzahl von Dauermagneten ist;

t die Ultraschallwellen-Ausbreitungszeit ist, die zwischen dem Magneten des/der zweiten Dauermagneten, der von dem Referenzpunkt aus $(L-\beta)$ entfernt positioniert ist und der Position des Magneten der ersten Mehrzahl von Dauermagneten, der auf derselben Seite des Referenzpunktes dem/den zweiten Dauermagneten am nähesten liegt, gemessen werden kann; und

T die Ultraschallwellen-Ausbreitungszeit ist, die zwischen zweien der ersten Mehrzahl von Dauermagneten gemessen werden kann, die zu beiden Seiten des/der zweiten Dauermagneten in einem Abstand von $(L-\beta)$ von dem Referenzpunkt positioniert sind.

2. Positionsdetektor für ein bewegliches Objekt mit:

einem magnetostriktiven Wellenleiter (1) mit einem darin angebrachten Mittelleiter (2);

Mitteln (4) zum Anlegen eines gepulsten Stromes an den Mittelleiter;

einem beweglichen Objekt, das sich in axialer Richtung des Wellenleiters bewegt;

einer Mehrzahl von Mitteln (5) zur Erzeugung eines ersten Magnetfeldes, die auf dem beweglichen Objekt angebracht sind;

einem oder mehreren Mitteln (14) zur Erzeugung eines zweiten magnetischen Feldes, die in axialer Richtung des Wellenleiters angeordnet sind;

Mitteln (8, 9, 54) zur Erfassung und zum Zählen der Anzahl der Impulse der in dem Wellenleiter mittels der Mittel zur Erzeugung eines ersten und zweiten magnetischen Feldes erzeugten Impulse von magnetostriktiven Ultraschallwellen;

Mitteln (61—69) zur Messung der Ausbreitungszeit der Ultraschallwellen, die von den ersten Mitteln zur Erzeugung eines magnetischen Feldes erzeugt worden sind und der Ausbreitungszeit der Ultraschallwellen, die von den zweiten Mitteln zur Erzeugung eines magnetischen Feldes erzeugt worden sind; und

Mitteln (70) zur Bestimmung der Bewegungsentfernung des beweglichen Objekts aus der Anzahl der Ultraschall-Wellenimpulse und der Ultraschallwellen-Ausbreitungszeit.

3. Positionsdetektor für ein bewegliches Objekt nach Anspruch 2, bei dem sowohl die ersten als auch die zweiten Mittel zur Erzeugung eines magnetischen Feldes Dauermagnete sind.

4. Positionsdetektor für ein bewegliches Objekt nach Anspruch 3, bei dem die festgesetzten Abstände (I) zwischen den Magneten der ersten Mehrzahl von Magneten, die sich außerhalb des Wellenleiters befinden und sich in axialer Richtung des Wellenleiters bewegen, konstant sind.

5. Positionsdetektor für ein bewegliches Objekt nach Anspruch 3, bei dem sich die ersten Mehrzahl der Dauermagneten (5), die auf dem beweglichen Objekt angebracht ist, innerhalb des Bereiches, in dem sich das bewegliche Objekt bewegen kann, nicht an derselben Stelle befinden wie das auf dem Wellenleiter angebrachte Ultraschallwellen-Erfassungsmittel.

6. Positionsdetektor für ein bewegliches Objekt nach Anspruch 3, bei dem die Erfassungsmittel (8, 9) zur Erfassing der Ultraschallwellen, die von dem Wellenleiter erzeugt werden, am einem der Enden (3) des Wellenleiters (1) angebracht sind, und bei dem der/die zweiten Dauermagneten vom anderen Ende des Wellenleiters um eine Distanz $(\beta)$ beabstandet angebracht sind, wobei $\beta$ größer als der Abstand (I) der Magneten der ersten Mehrzahl von Dauermagneten, die auf dem beweglichen Objekt angebracht sind, ist.

**Revendications**

1. Procédé de détection de la position d'un objet mobile, de telle sorte que la distance de déplacement x de l'objet mobile soit déterminée à partir de la formule ci-dessous

(a) en comptant le nombre i d'impulsions d'ondes ultrasonores produites par une première pluralité d'aimants permanents se trouvant entre un point de référence et une position $(L-\beta)$ mesurée à partir dudit point de référence, ladite première pluralité d'aimants permanents étant fixés audit objet mobile, et

(b) en mesurant le temps entre des impulsions produites par ladite première pluralité d'aimants permanents et un ou des second(s) aimant(s) permanent(s), lesdites impulsions se propageant vers un point de référence auquel se trouvent des moyens de détection d'ondes ultrasonores:

$$x=L-(i-1+t/T)l-\alpha-\beta$$

L est la longueur totale d'un guide d'ondes;

$(L-\beta)$ est la position déterminée de l'aimant d'un ou plusieurs second(s) aimant(s) permanent(s) fixe(s) par rapport au guide d'ondes, qui se trouve le plus proche dudit point de référence mesurée à partir dudit point de référence;

$\alpha$ est la position de cet aimant de ladite première pluralité d'aimants permanents qui se trouve le plus proche dudit point de référence mesuré à partir dudit point de référence lorsque la position dudit objet mobile est zéro;

I est les espacements déterminés entre ladite première pluralité d'aimants permanents;

t est le temps de propagation de l'onde ultrasonore, qui doit être mesuré, entre ce aimant dudit ou desdits second(s) aimant(s) permanent(s) qui est positionné à (L−β) dudit point de référence et la position de l'aimant de ladite première pluralité d'aimants permanents qui se trouve le plus proche dudit ou desdits second(s) aimant(s) permanent(s) du côté dudit point de référence;

et T est le temps de propagation de l'onde ultrasonore, qui soit être mesuré, entre deux de ladite première pluralité d'aimants permanents positionnés des deux côtés dudit ou desdits second(s) aimant(s) permanent(s) positionné(s) à (L−β) dudit point de référence.

2. Détecteur de position pour un objet mobile comportant:

un guide d'ondes magnétostrictif (1) possédant à l'intérieur un fil central (2);

des moyens (4) pour appliquer un courant pulsé audit fil central;

un objet mobile se séplaçant dans la direction axiale dudit guide d'ondes;

une pluralité de premiers moyens de génération de champ magnétique (5) disposés sur ledit objet mobile;

un ou plusieurs seconds moyens de génération de champ magnétique (14) disposés dans la direction axiale dudit guide d'ondes;

des moyens (8, 9, 54) pour détecter et compter le nombre d'impulsions d'ondes ultrasonores magnétostrictives générées dans ledit guide d'ondes par lesdits premiers et seconds moyens de génération de champ magnétique;

des moyens (61—69) pour mesurer le temps de propagation de l'onde ultrasonore produite par lesdits premiers moyens de génération de champ magnétique et le temps de propagation de l'onde ultrasonore produite par lesdits seconds moyens de génération de champ magnétique; et

des moyens (70) pour déterminer la distance de déplacement dudit objet mobile à partir du nombre desdites impulsions d'ondes ultrasonores et ledit temps de propagation d'ondes ultrasonores.

3. Détecteur de position pour un objet mobile selon la revendication 2, dans lequel à la fois lesdits premiers et seconds moyens de génération de champ magnétique sont des aimants permanents.

4. Détecteur de position pour un objet mobile selon la revendication 3, dans lequel les espacement déterminés (l) entre la première pluralité d'aimants permanents existent à l'extérieur dudit guide d'ondes et se déplaçant dans la direction axiale dudit guide d'ondes sont constants.

5. Détecteur de position pour un objet mobile selon la revendication 3, dans lequel la première pluralité desdits aimants permanents (5) disposés sur ledit objet mobile ne se trouve pas à la même position desdits moyens de détection d'ondes ultrasonores disposés sur ledit guide d'ondes à l'intérieur de la plage dans laquelle ledit objet mobile peut se déplacer.

6. Détecteur de position pour un objet mobile selon la revendication 3, dans lequel les moyens de détection (8, 9) pour détecter l'onde ultrasonore générée sur ledit guide d'ondes sont disposés à une des extrémités (3) dudit guide d'ondes (1), et ledit ou lesdits second(s) aimant(s) permanent(s) est (sont) disposé(s) en des emplacements espacés d'une distance (β) de l'autre extrémité du guide d'ondes, où β est supérieur à l'espacement (l) de ladite première pluralité d'aimants permanents disposés sur ledit objet mobile.

## FIG. 1

## FIG. 2

(1) PULSE SIGNALS

(2) DETECTED SIGNAL

(3) OUTPUT OF FLIP-
FLOP

(4) DC OUTPUT

## FIG. 3

SOUND VELOCITY (m/s)

3200

3100

3000

0    100    200    300

TEMPERATURE (°C)

1

FIG. 4

FIG. 5

# FIG. 6

(1) PULSE SIGNALS

(2) DETECTED PULSES

(3) OUTPUT OF DE-LAY CIRCUIT 52

(4) OUTPUT OF RMM 56

(5) OUTPUT OF DE-LAY CIRCUIT 57

(6) OUTPUT OF DE-LAY CIRCUIT 53

(7) OUTPUT OF AND GATE 58

(8) OUTPUT OF FLIP-FLOP 59

(9) INPUT OF COUNTER 54

(10) RESET SIGNAL OF COUNTER 64

(11) INPUT OF COUNTER 64

(12) OUTPUT OF CHANGE-OVER DEVICE 65

## FIG. 7

(1) PULSE SIGNALS

(2) DETECTED PULSES

40 42 41 43

$t_1$ $t_2$ $t_3$

## FIG. 8

(1) PULSE SIGNALS

(2) DETECTED PULSES

44 43 45

$t_1$ $t_2$

## FIG. 9

(1) PULSE SIGNALS

$T_P$

(2) DETECTED PULSES

$T$ $t$

4

FIG. 11

FIG. 10